# EUROPEAN PATENT SPECIFICATION

(11) **EP 3 340 550 B1**
(45) Date of publication and mention of the grant of the patent: **06.04.2022**
(21) Application number: 16836450.3
(22) Date of filing: 25.05.2016
(51) Int. Cl.: H04L 12/723, H04L 12/741, H04L 12/703

(54) **SERVICE MESSAGE MULTICAST METHOD AND DEVICE**
MULTICAST-VERFAHREN UND -VORRICHTUNG FÜR DIENSTNACHRICHTEN
PROCÉDÉ ET DISPOSITIF DE MULTIDIFFUSION DE MESSAGES DE SERVICE

(30) Priority: 19.08.2015 CN 201510511381
(43) Date of publication of application: 27.06.2018
(73) Proprietor: China Mobile Communications Group Co., Ltd, Beijing 100032 (CN)
(72) Inventor: CHENG, Weiqiang, Beijing 100032 (CN)
(74) Representative: J A Kemp LLP
(86) International application number: PCT/CN2016/083312
(87) International publication number: WO 2017/028586

(56) References cited:
- EP-A1- 2 892 196
- WO-A1-2014/071538
- CN-A- 102 025 626
- CN-A- 103 297 259
- US-A1- 2004 037 279
- US-A1- 2006 221 958
- US-A1- 2011 280 123
- US-A1- 2011 286 324
- US-B1- 7 496 096
- US-B1- 7 965 656

## Description

### TECHNICAL FIELD

The disclosure relates to the technical field of communications, and in particular to a service message multicast method and device.

### BACKGROUND

In recent years, domestic and foreign mobile operators have been making a great effort to construct Long Term Evolution (LTE) networks in order to realize multi-service bearing and increase bandwidth, and especially, the mobile video service has drawn much attention.

The LTE evolved Multimedia Broadcast Multicast Service (eMBMS) is capable of realizing share of a single bandwidth resource by multiple users between a service system and user equipments by multiplexing existing LTE network resources and sufficiently utilizing the advantages of high bandwidth, low delay and all IP of the LTE, with network load and user experience not changing along with the increase of user number. Therefore, compared with the unicast technology, the LTE evolved multimedia broadcast multicast service can greatly save wireless air interface and network transmission resources and improve the experience of users in video services.

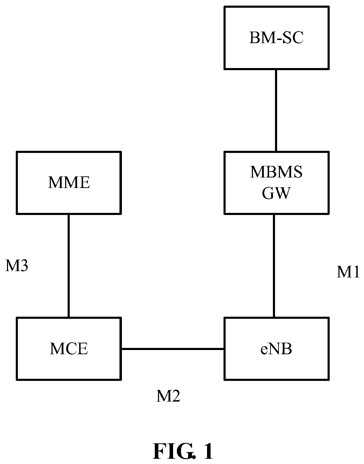

In the age of the 3d-Generation (3G) mobile communication, the Multimedia Broadcast Multicast Service (MBMS) mainly depends on the existing 3G network architecture, and the MBMS service is provided and managed by introducing a Broadcast Multicast-Service Center (BM-SC). The network architecture of eMBMS is different from the network architecture of MBMS at the age of 3G. The network architecture of eMBMS is shown in FIG. 1. It can be seen from FIG. 1 that in addition to the original Evolved Packet Core (EPC) and existing Mobility Management Entity (MME) and evolved Node B (eNB) of an LTE network, two network elements are added, i.e., Muiti-cell/Multicast Coordination Entity (MCE) and MBMS Gate Way (MBMS GW). The original BM-SC introduced at the age of 3G still exists, and is located over MBMS GW to comprehensively manage the MBMS service of the network. In the network architecture of eMBMS, M2 (E-UTRAN internal control plane interface) and M3 (control plane interface between E-UTRAN and EPC) are control plane interfaces, which are two-way interfaces. M1 (user plane interface) is a user plane interface, which is a downlink one-way interface from a core network to bear the multicast service.

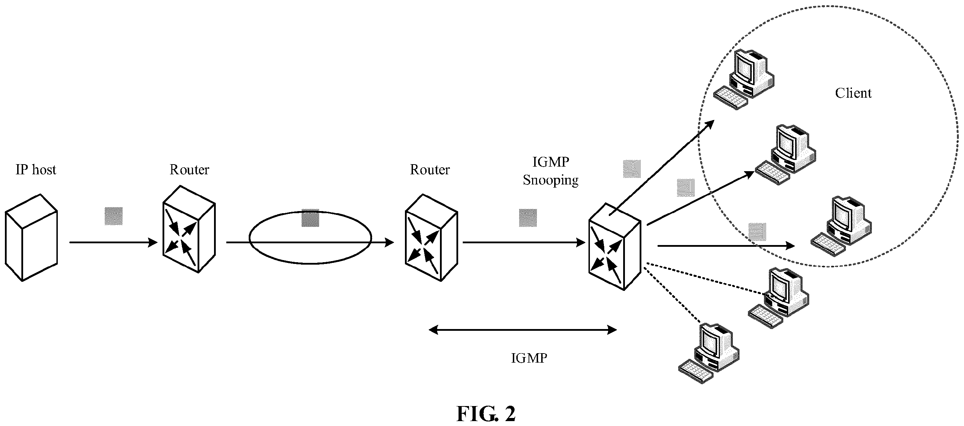

The mainstream multicast technologies which support eMBMS service bearing in existing transmission bearing networks are:
Layer-2 Multicast: As shown in FIG. 2, an Internet Group Management Protocol (IGMP)+Snooping standard is adopted. This protocol mainly runs between an Internet Protocol (IP) host and routers, and the implemented function is two-way. For the unicast service and multicast service of eNB, independent logic interfaces are adopted (one sub-interface of eNB is dedicated to the unicast service, and the other sub-interface of eNB is dedicated to the multicast service), and each interface bears a different service. In addition, in order to prevent an IP multicast message from being replicated to all ports in an Ethernet according to a broadcast mode to cause the waste of a lot of network resources, an IGMP Snooping implementation method is generally adopted.

Adopting the IGMP+Snooping standard, the layer-2 multicast technology effectively prevents the broadcast and replication of an IP multicast message in a large quantity in the Ethernet, but for a mobile backhaul network with a larger number of nodes, if the IGMP is used, efficiency is low. In addition, the IGMP alone cannot solve the issue of protection capability required by networks, that is, when malfunctioning, a network has the capability to be automatically recovered.

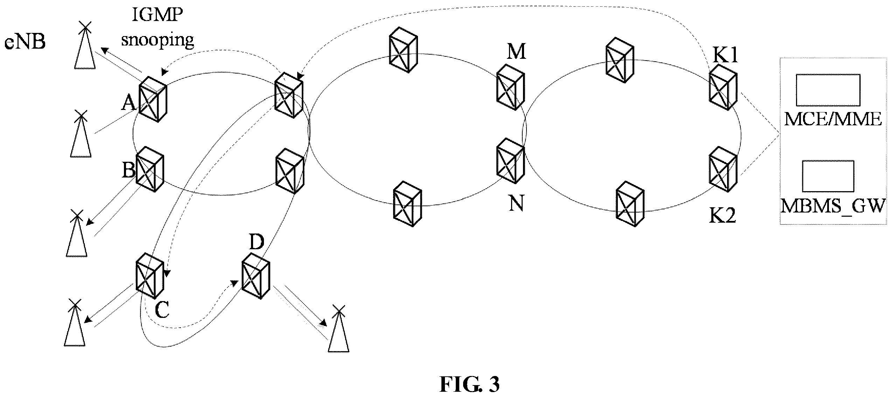

Layer-3 Multicast: As shown in FIG. 3, a Protocol Independent Multicast-Sparse Mode (PIM-SM) standard is adopted. In an IP network, layer-3/IP multicast can realize Point-to-MultiPoint high-efficient data transmission. The layer-3/IP multicast technology requires the establishment of a multicast group first, a source host only sends a single piece of data with a multicast address as a destination address, all ports in a multicast domain can receive the data, while irrelevant ports cannot receive the data. The IP multicast technology can dynamically control ports to join and quit the multicast domain.

Although the layer-3/IP multicast technology which adopts the PIM-SM standard can dynamically control the ports to join and quit the multicast domain, realizing Point-to-MultiPoint data transmission in the IP network, the dynamic protocol has to be switched on, the protocol is complex, and moreover, the network protection capability is limited as well.

The packet transport technology based on the Multi-Protocol Label Switching Transport Profile (MPLS-TP) has been widely applied in metropolitan area network systems to bear mobile backhaul or fixed private line service. Based on the tunneling technology, MPLS-TP can realize Point-to-Point Prisoner of War (PW) and Label Switching Path (LSP) transmission, and can realize fast fault detection by means of a highly efficient Operations, Administration and Maintenance (OAM) mechanism and protection switching mechanism. However, the MPLS-TP does not have a mature Point-to-Multi Point technical solution yet. Standardization organizations including Internet Engineering Task Force (IETF) have documents which mention PW and LSP of P2MP for supporting P2MP service, but the implementation technologies are complex, cannot ensure fast fault detection and protection switching, and, the deployed MPLS-TP-based equipment cannot be upgraded.

To sum up, the Point-to-MultiPoint P2MP service message multicast implementation technologies based on the MPLS-TP technology in the prior art are complex, cannot ensure fast fault detection and protection switching, and, the deployed MPLS-TP-based equipment cannot be upgraded.

US 2004/0037279 A1 discloses a method for data broadcast over a network includes receiving at a virtual bridge a data packet to be flooded over the network, and passing the data packet from the virtual bridge to a multicast-capable router, along with a broadcast indication.

US 7,965,656 B1 disclose a method. apparatus and computer program product for building multipoint Pseudo Wires (PWs) using Multicast Label Distribution Protocol (MLDP).

WO 2014/071538 A1 discloses a method and communication node for configuring a multicast group in a MPLS network.

EP 2892196 A1 discloses a method for implementing point-to-multipoint multicast, a network node, and a system, which can be applied to P2MP multicast in a non-VPN scenario and can also implement deployment when a PE device does not support mLDP.

US 201110286324 A1 discloses failure detection and traffic redirection implemented in an OpenFlow switch.

US 201110280123 Al discloses a method includes receiving at a router, a multicast label distribution protocol message comprising local node information for a protected node and one or more leaf nodes downstream of the protected node in a primary label switched path, creating one or more backup label switched paths to the one or more leaf nodes, detecting a failure at the protected node, and forwarding at the router, traffic for the one or more leaf nodes to the one or more backup label switched paths.

CN 102025626A discloses a provider edge device transmitting a multicast data message based on a multicast IP address.

### SUMMARY

### (1) Technical Problems to Be Solved

The objective of embodiments of the disclosure is to provide a service message multicast method and device, which are used to carry out multicast of a service message via a Point-to-Point (P2P) path to ensure fast fault detection and protection switching and are applicable to Multiprotocol Label Switching-Transport Profile (MPLS-TP)-based devices that have been deployed.

### (2) Technical Solution

The features of the method and device according to the present invention are defined in the independent claims, and the preferable features according to the present invention are defined in the dependent claims.

### (3) Advantages

The embodiments of the disclosure at least have the following advantages:
The service message multicast method and device provided according to the embodiments of the disclosure can carry out multicast of a service message via Point-to-Point (P2P) path, thus ensuring fast fault detection and protection switching, and are applicable to Multiprotocol Label Switching-Transport Profile (MPLS-TP)-based devices that have been deployed.

### BRIEF DESCRIPTION OF DRAWINGS

In order to more clearly illustrate the technical solution in the embodiment of the disclosure or the prior art, the drawings which need to be used in the description of the embodiment or the prior art will be introduced briefly below. Apparently, the drawings described below are merely some of the embodiments of the disclosure, and those skilled in the art also can obtain other drawings according to these drawings without making creative efforts. In the drawings (not necessarily drawn according to a proportion), the similar drawing marks can describe similar parts in the different diagrams. The similar drawing marks with different letter suffixes can represent different examples of the similar parts. The drawings almost show every embodiment discussed herein with examples rather than in a limiting manner.
FIG. 1 is a structural schematic diagram of an eMBMS network architecture in the prior art;
FIG. 2 is a schematic diagram of layer-2 multicast implemented by IGMP Snooping in the prior art;
FIG. 3 is a schematic diagram of layer-3 multicast in the prior art;
FIG. 4 is a schematic flow diagram of a service message multicast method provided by embodiments of the disclosure;
FIG. 5 is a schematic diagram of a working path and protection path construction process according to the embodiments of the disclosure;
FIG. 6 is a schematic diagram of determining root nodes and leaf nodes according to the embodiments of the disclosure;
FIG. 7 is a schematic operating principle diagram of a node device with a switch machine according to the embodiments of the disclosure;
FIG. 8 is a schematic diagram of encapsulation and decapsulation of a service message according to the embodiments of the disclosure;
FIG. 9 is a structural schematic diagram of end-to-end PTN multicast bearing according to the embodiments of the disclosure;
FIG. 10 is a structural schematic diagram when an access side link fault occurs according to the embodiments of the disclosure;
FIG. 11 is a structural schematic diagram of working path switching during the access side link fault according to the embodiments of the disclosure;
FIG. 12 is a structural schematic diagram when a convergence side link fault occurs according to the embodiments of the disclosure;
FIG. 13 is a structural schematic diagram of working path switching during the convergence side link fault according to the embodiments of the disclosure;
FIG. 14 is a structural schematic diagram when a core side link fault occurs according to the embodiments of the disclosure;
FIG. 15 is a structural schematic diagram of working path switching according to the embodiments of the disclosure during the core side link fault;
FIG. 16 is a structural schematic diagram according to the embodiments of the disclosure when a convergence node device fault occurs;
FIG. 17 is a structural schematic diagram of working path switching according to the embodiments of the disclosure during the convergence node device fault;
FIG. 18 is a structural schematic diagram according to the embodiments of the disclosure when a core node device fault occurs;
FIG. 19 is a structural schematic diagram of working path switching according to the embodiments of the disclosure during the core node device fault;
FIG. 20 is a structural schematic diagram according to the embodiments of the disclosure when an another convergence node device fault occurs;
FIG. 21 is a structural schematic diagram of working path switching according to the embodiments of the disclosure during the another convergence node device fault;
FIG. 22 is a schematic diagram of a multicast service fault detection process according to the embodiments of the disclosure; and
FIG. 23 is a structural schematic diagram of a service message multicast device according to the embodiments of the disclosure.

### DETAILED DESCRIPTION

The specific embodiments of the disclosure will be further described hereinafter in reference to the drawings and embodiments. The embodiments below are merely used to illustrate the disclosure rather than limit the scope of the disclosure.

In order to make the objective, technical solutions and advantages of the embodiments of the disclosure clearer, the technical solutions of the embodiments of the disclosure will be clearly and completely described hereinafter in reference to the drawings of the embodiments of the disclosure. Apparently, the described embodiments are part of the embodiments of the disclosure rather than all the embodiments. All other embodiments which are obtained by those of ordinary skill in the art on the basis of the described embodiments of the disclosure shall fall within the protection scope of the disclosure.

Unless otherwise defined, the technical terms or scientific terms used herein should be ordinary meanings that can be understood by those of ordinary skill in the art to which the disclosure belongs. "first", "second" and similar words used in the description and claims of the patent application of the disclosure do not represent any sequence, number or importance but are used to differentiate different components. Likewise, "a", "one" or similar words do not represent quantity limitation as well, but represent the existence of at least one. "connect", "link" or similar words are not limited to physical or mechanical connection, but can include electric connection, no matter whether it is direct or indirect. "upper", "lower", "left", "right" and the like are only used to represent relative position relations, and after the absolute position of a described object is changed, the relative position relation is also correspondingly changed.

The specific embodiments of a service message multicast method and device according to the embodiments of the disclosure are illustrated in detail hereinafter in reference to the drawings.

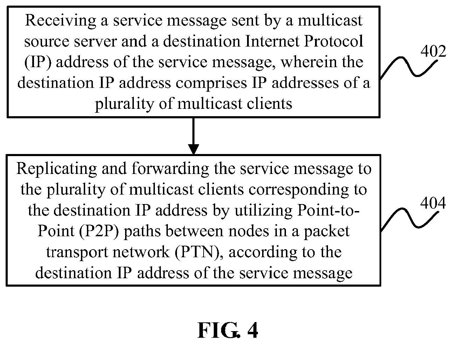

The embodiments of the disclosure provide a service message multicast method, and as shown in FIG. 4, the method includes the following steps.

In Step 402, a service message sent by a multicast source server and a destination Internet Protocol (IP) address of the service message are received, wherein the destination IP address includes IP addresses of a plurality of multicast clients; and

In Step 404: the service message is replicated and forwarded to the plurality of multicast clients corresponding to the destination IP address by utilizing a Point-to-Point (P2P) path between nodes in a packet transport network (PTN), according to the destination IP address of the service message.

In the method according to the embodiments of the disclosure, after the service message sent by the multicast source server and the destination IP address of the service message are received, the service message is replicated and forwarded to the plurality of multicast clients corresponding to the destination IP address according to the destination IP address of the service message by utilizing the Point-to-Point (P2P) path between the nodes in the packet transport network (PTN), and thus, the replication and forwarding of the service message to the plurality of multicast clients via the P2P path between the nodes in the PTN are fulfilled. Compared with the complex Point-to-MultiPoint (P2MP) service message multicast implementation technologies based on the MPLS-TP technology in the prior art, the method realizes the multicast of P2MP service message in a P2P mode, and can continue to use the fault detection and protection switching of the P2P mode, thus ensuing fast fault detection and protection switching, and the method is applicable to MPLS-TP-based devices that have been deployed.

It is worth mentioning that a Point-to-Point (P2P) path in the PTN can be a Prisoner of War (PW) path or a label switching path (LSP). Hereinafter, PW is taken as an example for illustration in the embodiments of the disclosure, and on this basis, those skilled in the art can obtain LSP-based embodiments by appropriate modifications.

It should be mentioned that the multicast source server refers to a sender, the service message is encapsulated by the multicast source before accessing the PTN, and meanwhile, the multicast source server sends and receives IGMP protocol message. The multicast client refers to a receiver of multicast service message, which receives service message sent by the PTN, and meanwhile, the multicast client sends and receives IGMP protocol message.

In one possible embodiment, in the method according to the embodiment of the disclosure, the nodes in the PTN include at least one root node and at least one leaf node, the multicast source server is connected to the root node, and the multicast clients are connected to the leaf node.

During specific implementation, the root node is connected to the multicast source server, and is a network element node via which the multicast source server accesses the PTN. In another aspect, the leaf node is connected to the multicast clients, and is a network element node via which the multicast clients access the PTN. Of course, those skilled in the art should understand that the leaf node can be connected to the root node as well as other leaf nodes in the PTN.

In one possible embodiment, in the method according to the embodiment of the disclosure, replicating and forwarding the service message to the plurality of multicast clients corresponding to the destination IP address by utilizing a P2P path between nodes in a PTN, according to the destination IP address of the service message specifically includes:
when replicating and forwarding the service message to the plurality of multicast clients corresponding to the destination IP address, if it is determined that a current node in the PTN needs to utilize the P2P path to send the service message to a plurality of nodes of a next level, any node in a network layer at which the current node is located is selected as a master node and another node in the network layer as a standby node, where the current node is a root node or a leaf node; and the service message is replicated and forwarded to the plurality of nodes of the next level by the master node and the standby node.

In one possible embodiment, in the method according to the embodiment of the disclosure, the path via which the master node replicates and forwards the service message to the plurality of nodes of the next level is a working path, and the path via which the standby node replicates and forwards the service message to the plurality of nodes of the next level is a protection path. Or, the path via which the master node replicates and forwards the service message to the plurality of nodes of the next level is a protection path, and the path via which the standby node replicates and forwards the service message to the plurality of nodes of the next level is a working path.

As a preferred embodiment, the current node serves as a master node, any one of the other nodes in the network layer with the current node serves as a standby node, and both the master node and the standby node need to carry out the replication and forwarding of the service message. The network layer where the current node is located can include an access ring, a convergence ring and a core ring.

Of course, those skilled in the art should understand that if the current node only needs to forward the service message to a node of the next level, then the service message is directly forwarded to the node of the next level.

In one possible embodiment, in the method according to the embodiment of the disclosure, a path via which the master node forwards the service message to any node of the next level is different from a path via which the standby node forwards the service message to the node of the next level.

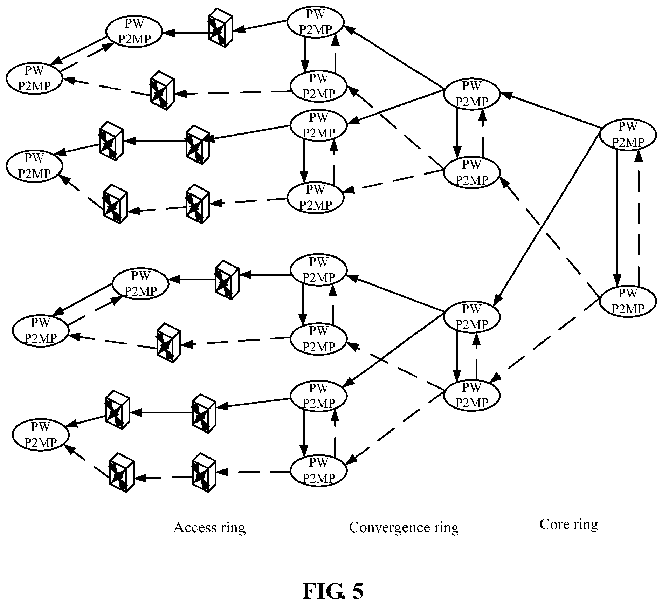

As a specific embodiment, taking a metropolitan area network (MAN) as an example, a service message forwarding path establishment process is illustrated. The metropolitan area network is generally composed of multiple layers of ring networks, which are divided into an access ring, a convergence ring and a core ring, as shown in FIG. 5. By means of a centralized routing algorithm system, such as a Software Defined Network (SDN) controller, and a centralized network management system, a centralized network can better provide centralized operation and maintenance management of decentralized devices than conventional networks, realizing visualized network topology presentation and an intelligent and highly efficient routing algorithm. Here, a control plane (such as the control layer in an SND network) in the centralized routing algorithm system can obtain the global topology of the network and, from the global perspective, establish two multicast paths, which are a working path (the path shown as a solid line in FIG. 5) and a protection path (the path shown as a dotted line in FIG. 5). Moreover, the centralized routing algorithm system senses the change of the network in real time by means of the whole network topology to make dynamic adjustment, and therefore is more flexible. Via the working path and the protection path, the service message sent by the multicast source server is replicated and forwarded to the plurality of multicast clients. Specifically speaking:

By designating root nodes and leaf nodes in a layer-2 static network, P2P PW forwarding paths are established between the root nodes and the leaf nodes, i.e. working paths and protection paths, and the working paths and the protection paths depend on the OAM of PWs to carry out fault detection.

The service message is forwarded along the working paths and the protection paths which are composed of the PWs, only one data stream exists in the same service message in an established forwarding path, and the multicast data stream is forwarded along the leaf nodes. On the branch nodes of the working path and the protection path, that is, when the service message of a current node needs to be forwarded to a plurality of nodes of the next level, the branch nodes carry out the replication of the multicast data steam directing to different directions, ensuring that only one multicast data steam exists in the same downstream direction. Moreover, the branch nodes are responsible for selecting a master node and a standby node, the master node and the standby node replicate the service message and forward the replicated service message to the plurality of nodes of the next level, and ultimately, the replicated service message is transmitted to the multicast clients, such as base stations.

The service message carries out at a leaf node, only when a corresponding multicast request is snooped can the leaf node replicate the service message and push the replicated service message to corresponding hosts, and the host can be an IGMP client or an IGMP application network.

It is worth mentioning that multicast source servers or downlink routers of the multicast source servers are required to be deployed at the root nodes of the layer-2 static network and that the leaf nodes can be deployed at any positions after the root nodes.

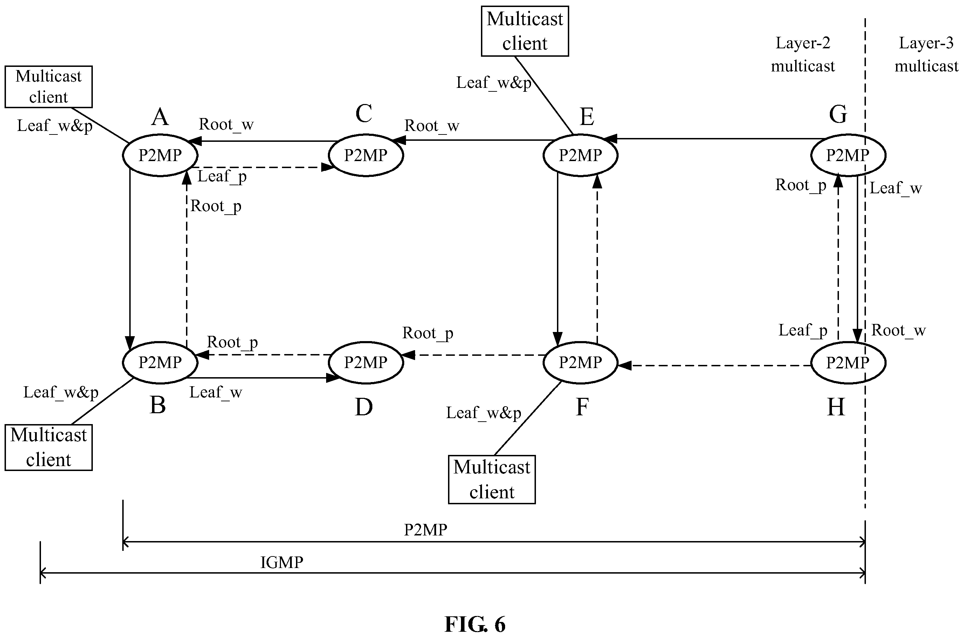

In reference to FIG. 6, taking PW P2MP multicast as an example, the service message multicast method of the embodiments of the disclosure are illustrated in detail hereinafter. As shown in FIG. 6, root nodes (root) of PW P2MP multicast are the node G and the node H shown in FIG. 6.

End-to-end static gateways or controllers establish a multicast working path according to the deployed root nodes and leaf nodes (leaf), i.e. the path shown as the solid line in FIG. 6. In addition, in order to deploy fast protection for the multicast service, a protection path is also established between the root nodes and the leaf nodes, i.e. the path shown as the dotted line in FIG. 6. It is ensured that no shared risk link group is generated from the working path and the protection path to any leaf node, that is, the working path via which a service message is forwarded to any node is different from the protection path via which the service message is forwarded to the node.

By establishing the multicast paths, working path inbound ports on all the nodes of the multicast paths are working Root ports, and protection path inbound ports are protection Root ports. Each node only has and has only one working Root port and only one protection Root port. In addition, besides the working Root port and the protection Root port, all other user network interfaces (UNI) and network node interfaces (NNI) are Leaf ports. Specifically speaking: The selection of working leaves and protection leaves is determined on the basis of the working path and the protection path in the ring, the other leaf nodes all belong to ordinary leaf nodes, and PTN devices A, B, C and D are taken as examples for illustration.

With regard to the PTN device A: it is defined as a working root node (Root_w) in an inbound port direction (C->A) from the working path; it is defined as a protection root node (Root_p) in an inbound port direction (B->A) from the protection path; it is defined as a working leaf node (Leaf_w) in an outbound port direction (A->B) along the working path in the local ring; and downstream ring nodes can all be defined as common leaf nodes (Common Leaf).

With regard to the PTN device B: it is defined as a protection root node (Root_p) in an inbound port direction (D->B) from the protection path; it is defined as a working root node (Root w) in an inbound port direction (A->B) from the working path; it is defined as a working leaf node (Leaf_w) in an outbound port direction (B->D) along the working path in the local ring; and downstream ring nodes can all be defined as common leaf nodes (Common Leaf).

With regard to the PTN device C: it is defined as a working root node (Root w) in a direction (E->C) from the working path; it is defined as a protection root node (Root_p) in a direction (A->C) from the protection path; and it is defined as a working leaf node (Leaf w) in an outbound port direction (C->A) along the working path in the local ring.

With regard to the PTN device D: it is defined as a protection root node (Root_p) in a direction (F->D) from the protection path; it is defined as a working root node (Root w) in a direction (B->D) from the working path; and it is defined as a protection leaf node (Leaf_p) in an outbound port direction (D->B) along the protection path in the local ring.

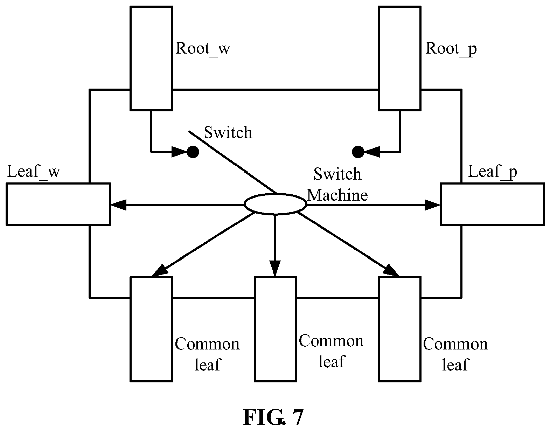

All the UNI (User Network Interface) and NNI (Network to Network Interface) leaf nodes are ports with working path and protection path switch machines, as shown in FIG. 7. The switch machines control switches to carry out selection, and the states of the working path and protection path switch machines are determined by automatic protection switching (APS) state machines of the working path and the protection path. Specifically speaking:
Forwarding process of multicast service at a single node: (1) When the states of the APS state machines of the working path and the protection path are working, the working Root port receives multicast service and only sends the multicast service to the working Leaf port, the protection Leaf port and all the other ports with the switch machines. (2) When the states of the APS state machines of the working path and the protection path are protection, the protection Root port receives multicast service and only sends the multicast service to the working Leaf port and the protection Leaf port.

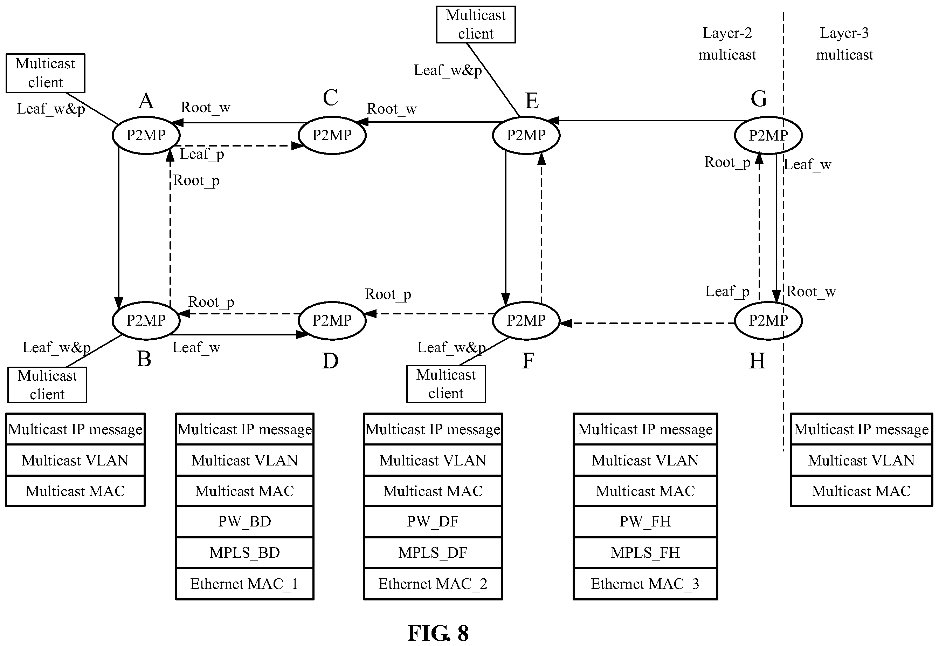

A service message encapsulation and decapsulation process in the embodiments of the disclosure will be illustrated hereinafter in reference to FIG. 8. As shown in FIG. 8, in a direction from a multicast source server to multicast clients, a unidirectional multicast service stream is sent as follows: a message sent by the multicast source server is an ETH-encapsulated (Ethernet-encapsulated) multicast IP message which meets the Ethernet link layer protocol encapsulation format, the destination IP address is an address within a multicast IP address range (224.0.1.0 to 239.0.0.0), and the DMAC of the message is a multicast IP-mapped multicast MAC address.

Root nodes of a layer-2 multicast network identify the multicast service message, forward the multicast service message to P2MP multicast service paths, and carry out MPLS encapsulation of the multicast service. When being forwarded in the P2MP paths (the working path and the protection path), the multicast service carries an encapsulation tunnel, a pseudo-wire label and an Ethernet encapsulation at an outer layer.

A Leaf node of the layer-2 multicast network carries out decapsulation, ejecting the tunnel and pseudo-wire encapsulation and the Ethernet header at the outer layer, so that the multicast service message is recovered, and the multicast service is sent to the multicast clients from a corresponding UNI.

In a direction from the multicast clients to the multicast source server: When IGMP Snooping is not used, IGMP protocol message sent by the multicast client ports is forwarded in the same way as the service message. When IGMP Snooping is used, the message will be snooped and forwarded to the multicast source server.

In the embodiments of the disclosure, multicast service and unicast service share the same physical network, and besides the same requirement as in unicast physical networking, multicast physical networking must also meet the following principles:
Devices only support layer-2 multicast, IGMP Snooping and P2MP;
PW P2MP is adopted to establish multicast paths, and it is suggested that master and standby PW P2MP forwarding paths are established to bear the multicast service.

In one possible embodiment, in the method according to the embodiment of the disclosure, the method further includes: when any node or the P2P path between the nodes in the PTN fails, a node of the next level connected to the node or the path reselects a PW path to receive the service message.

During specific implementation, for the layer-2 network, a P2MP multicast 1+1 channel protection solution is adopted to support fast protection against link faults and node faults in multicast forwarding paths, protection switching depends on MPLS OAM fast detection and APS state switching, and 50ms of single-node fast switching can be realized.

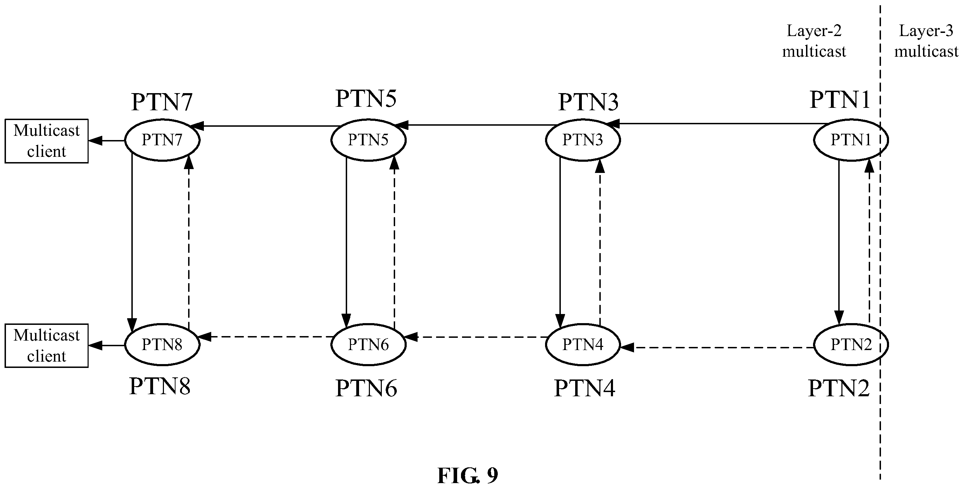

Specifically speaking, the end-to-end PTN multicast bearing solution configures static PW P2MP multicast bearing channels in the layer-2 domain, as shown in FIG. 9. What is shown as the solid line in FIG. 9 is a working path, what is shown as the dotted line is a protection path, and the specific protection configuration detail is as follows:

Master and standby multicast PW P2MP forwarding paths (channels) are respectively established from two multicast Root nodes (shown as PTN1/PTN2 in FIG. 9), and the PW P2MP channels are composed of end-by-end PWs, and all need to be configured with connectivity detection; and any node fault and link fault will trigger nodes of the next level in the current ring to carry out master and standby service selection.

The nodes (shown as PTN1/PTN2/PTN3/PTN4/PTN5/PTN7/PTN6/PTN8 in FIG. 9) create multicast service models, and select multicast master Root ports and Leaf ports and standby Root ports and Leaf ports (including UNI and NNI type Leaf ports), where the NNIs are bound with the P2MP channel PWs.

Protection of the multicast service: The sending of multicast service depends on hardware APS state machines for selection, which is equivalent to selective receiving of the multicast service between the working Root port and protection Root port of a node, 1+1 traffic backup is formed on the nodes, and thereby fast protection switching can be carried out.

In reference to specific embodiments, an access side link fault, a convergence side link fault, a core side link fault, a convergence node device fault and a core node device fault will be taken as examples to illustrate protection switching of the embodiments of the disclosure hereinafter.

### Embodiment 1: Access Side Link Fault

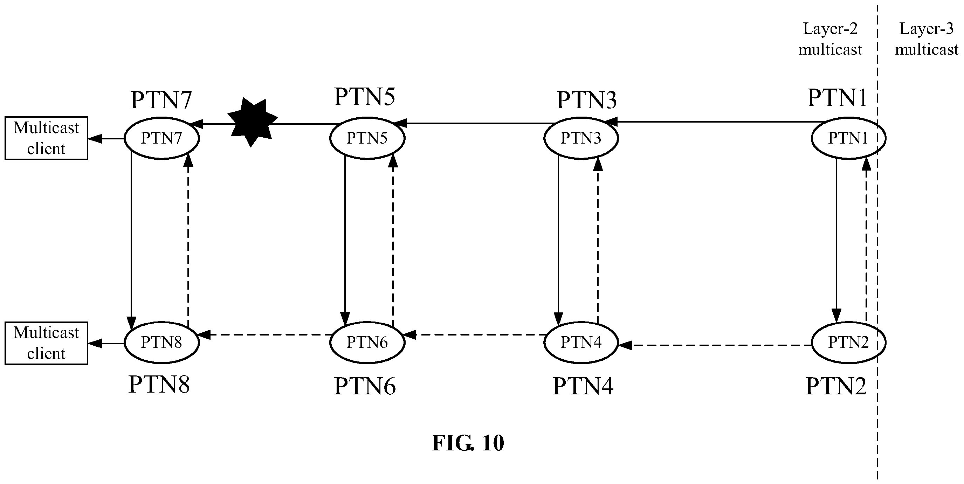

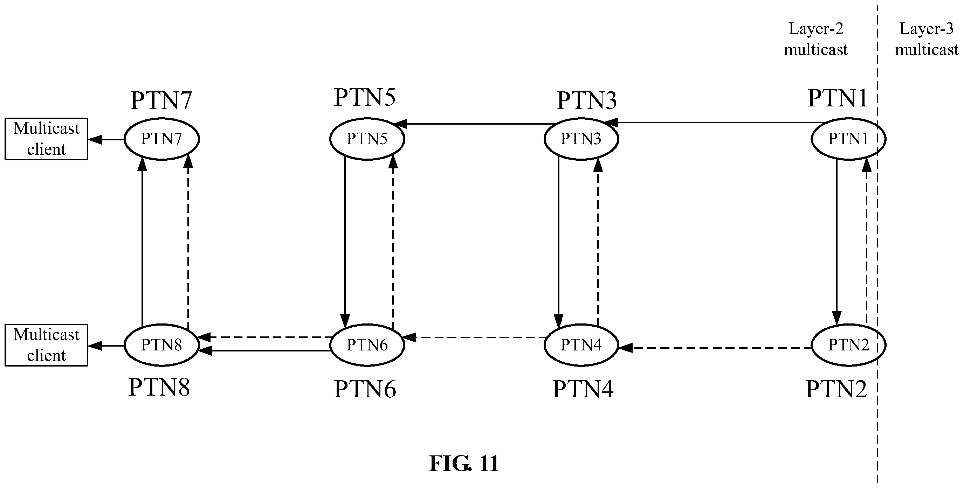

As shown in FIG. 10, for example, if the link between PTN5 and PTN7 fails, then the node of the next level in the link between PTN5 and PTN7 reselects a path to receive multicast service. Specifically speaking, as shown in FIG. 11, PTN7 carries out APS selection, selecting a protection path to receive the multicast service. PTN8 receives a working path fault indicator, and carries out APS selection, selecting the protection path to receive the multicast service. After switching, the multicast service flow is: PTN1->PTN3->PTN5->PTN6->PTN8->PTN7. Of course, during recovery from the fault, each node waits until the time of an APS Wait To Restore (WTR) timer expires, and then switches to the original working path (the working path shown in FIG. 9) to receive the multicast service.

### Embodiment 2: Convergence Side Link Fault

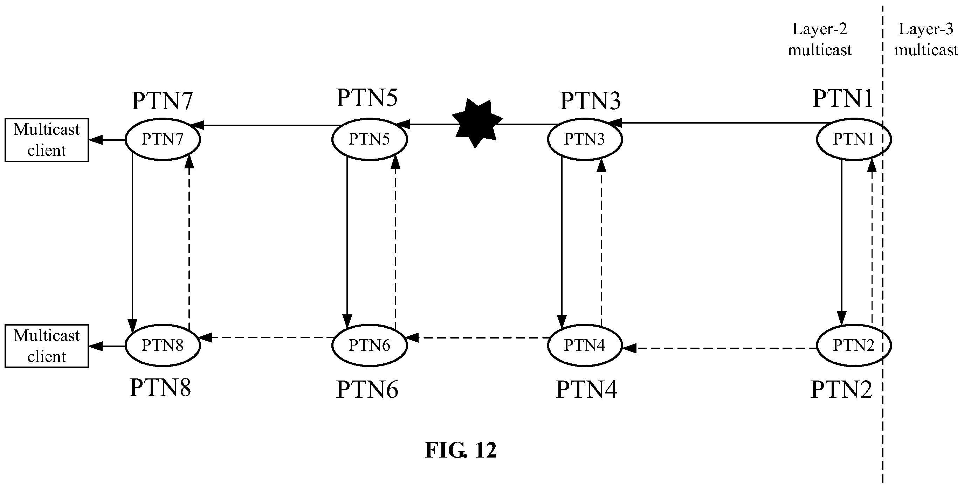

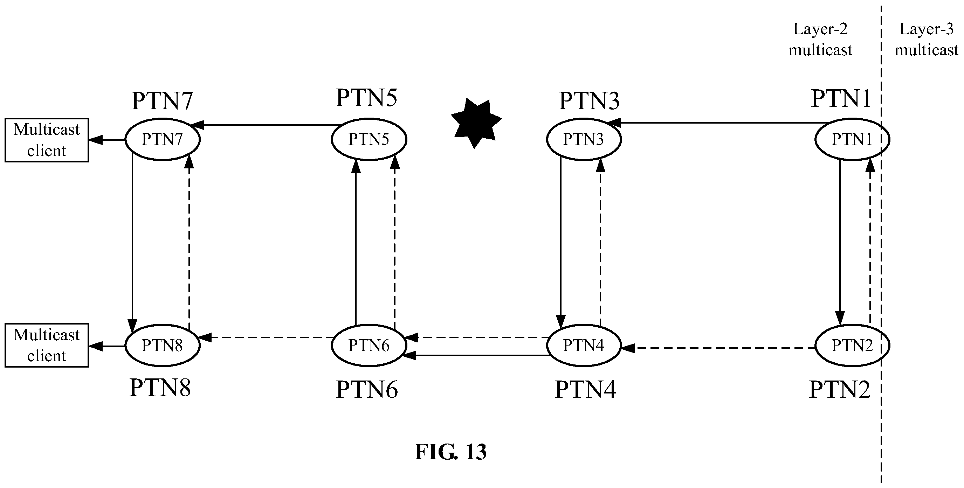

As shown in FIG. 12, for example, if the link between PTN5 and PTN3 fails, then the node of the next level in the link between PTN5 and PTN3 reselects a path to receive multicast service. Specifically speaking, as shown in FIG. 13, PTN5 carries out APS selection, selecting the protection path to receive the multicast service. PTN6 receives a working path fault indicator, and carries out APS selection, selecting the protection path to receive the multicast traffic. After switching, the multicast service flow is: PTN1->PTN3->PTN4->PTN6->PTN5->PTN7->PTN8. Of course, during recovery from the fault, each node waits until the time of the APS WTR timer expires, and then switches to the original working path (the working path shown in FIG. 9) to receive the multicast service.

### Embodiment 3: Core Side Link Fault

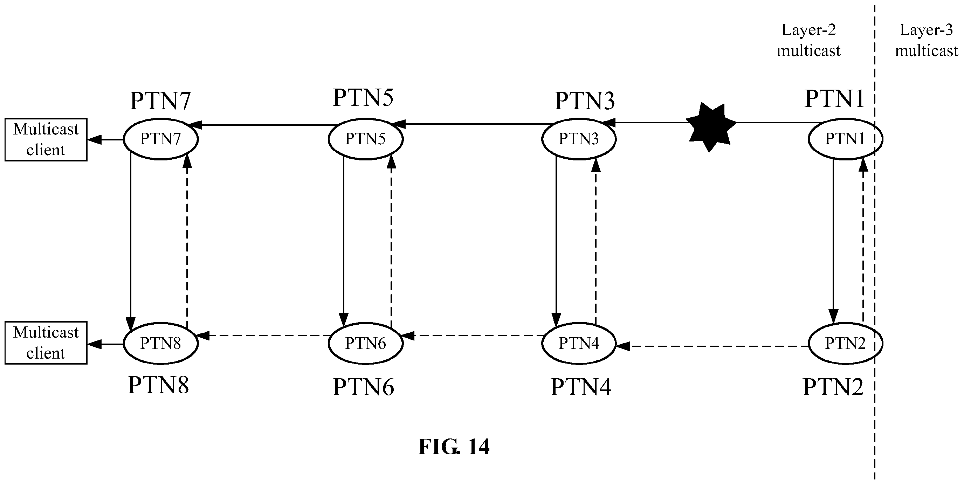

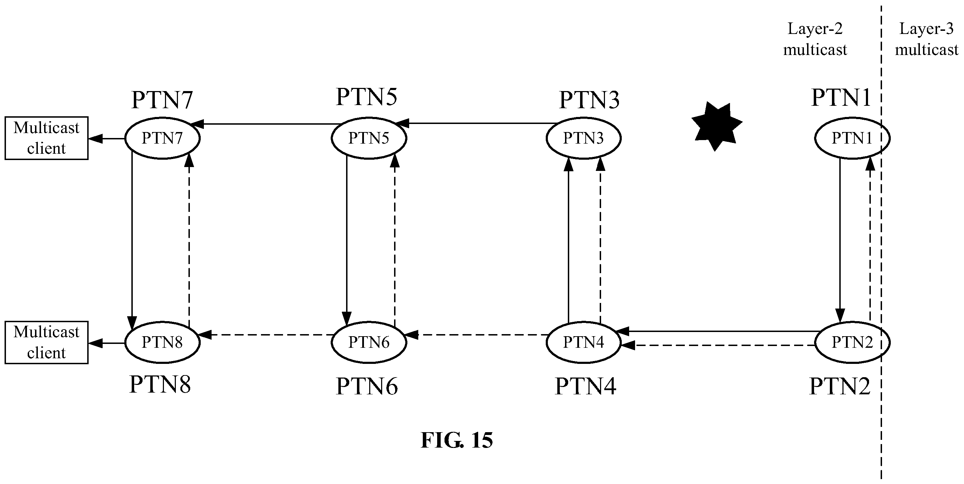

As shown in FIG. 14, for example, if the link between PTN3 and PTN1 fails, then the node of the next level in the link between PTN3 and PTN1 reselects a path to receive multicast service. Specifically speaking, as shown in FIG. 15, PTN3 carries out APS selection, selecting the protection path to receive the multicast service. PTN4 receives a working path fault indicator, and carries out APS selection, selecting the protection path to receive the multicast traffic. After switching, the multicast service flow is: PTN1->PTN2->PTN4->PTN3->PTN5->PTN7->PTN8. Of course, during recovery from the fault, each node waits until the time of the APS WTR timer expires, and then switches to the original working path (the working path shown in FIG. 9) to receive the multicast service.

### Embodiment 4: Convergence Node Device Fault

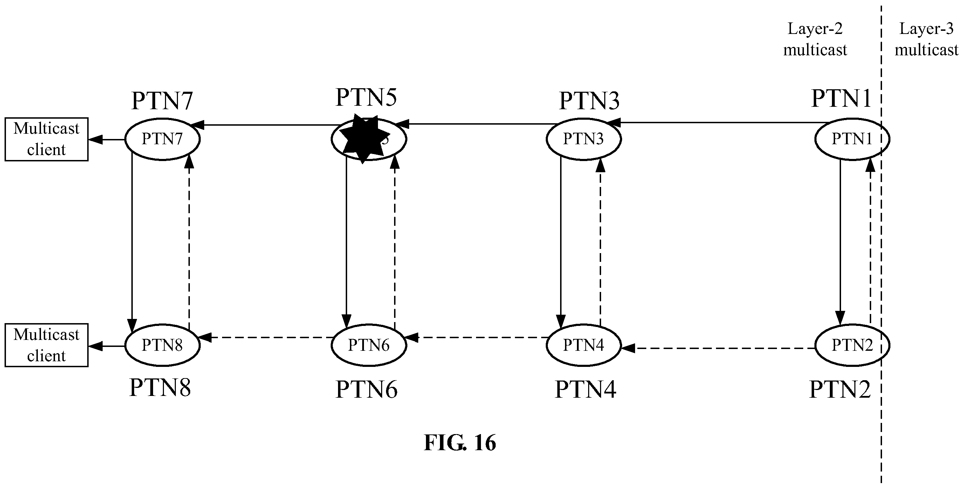

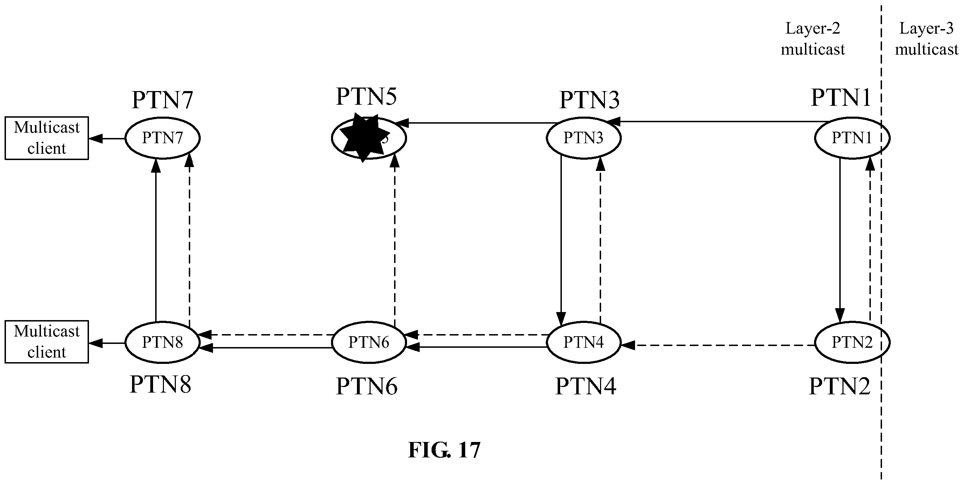

As shown in FIG. 16, for example, if PTN5 fails, then the node of the next level following PTN5 reselects a path to receive multicast service. Specifically speaking, as shown in FIG. 17, the nodes PTN7 and PTN8 sense the fault of the working path, and select the protection path to receive multicast traffic. The node PTN6 senses the fault of the working path, and selects the protection path to receive the multicast traffic. After switching, the multicast service flow is: PTN1->PTN3->PTN4->PTN6->PTN8->PTN7. Of course, during recovery from the fault, each node waits until the time of the APS WTR timer expires, and then switches to the original working path (the working path shown in FIG. 9) to receive the multicast service.

### Embodiment 5: Core Node Device Fault

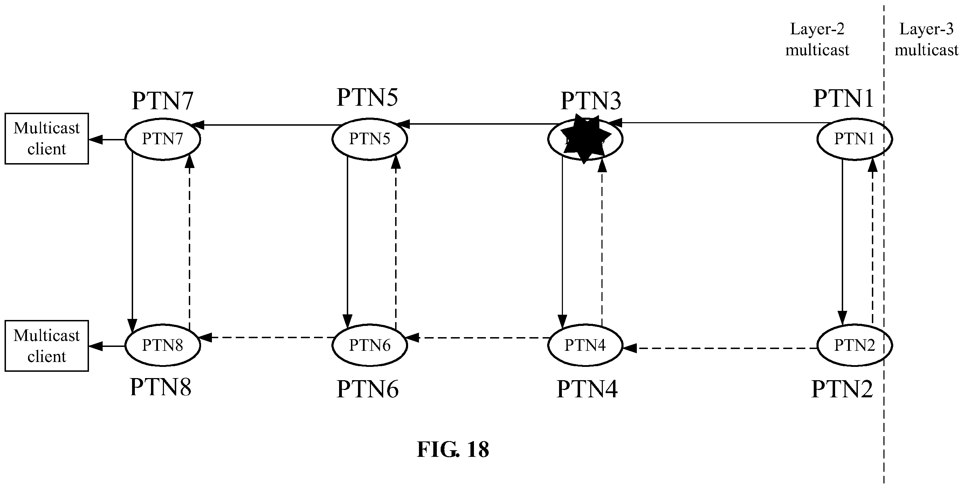

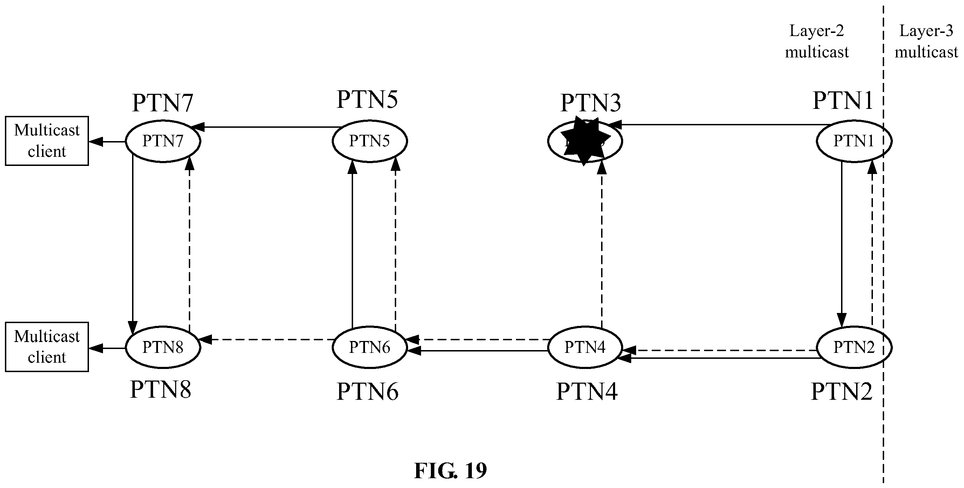

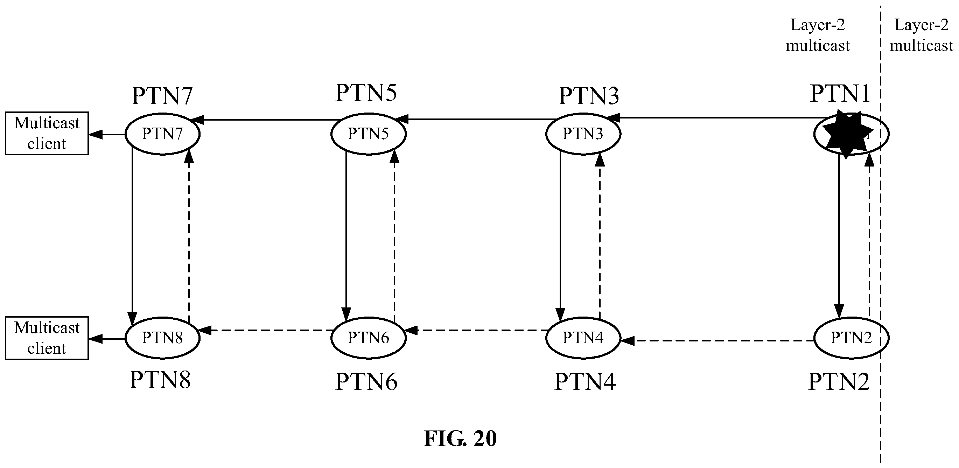

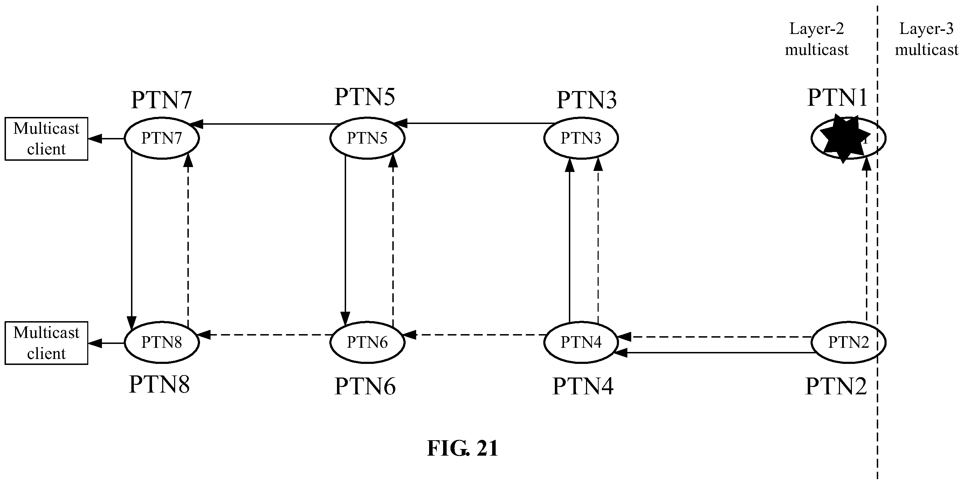

(1) As shown in FIG. 18, for example, if PTN3 fails, then the node of the next level following PTN3 reselects a path to receive multicast service. Specifically speaking, as shown in FIG. 19, the nodes PTN5 and PTN6 sense the fault of the working path, and select the protection path to receive multicast traffic. The node PTN4 senses the fault of the working path, and selects the protection path to receive the multicast traffic. After switching, the multicast service flow is: PTN1->PTN2->PTN4->PTN6->PTN5->PTN7->PTN8. Of course, during recovery from the fault, each node waits until the time of the APS WTR timer expires, and then switches to the original working path (the working path shown in FIG. 9) to receive the multicast service.
(2) As shown in FIG. 20, for example, if PTN1 fails, then the node of the next level following PTN1 reselects a path to receive multicast service. Specifically speaking, as shown in FIG. 21, the nodes PTN3 and PTN4 sense the fault of the working path, and select the protection path to receive multicast traffic. The node PTN2 senses the fault of the working path, and selects the protection path to receive the multicast traffic. After switching, the multicast service flow is: PTN2->PTN4->PTN3->PTN5->PTN7->PTN8. Of course, during recovery from the fault, each node waits until the time of the APS WTR timer expires, and then switches to the original working path (the working path shown in FIG. 9) to receive the multicast service.

It should be noted that for multicast bearing networking, the cooperation of multiple protections is involved, and corresponding OAM detection time is required to be configured in order to ensure the efficiency of switching during a fault. Only PW P2MP multicast protection is required to be configured for layer-2 multicast, and multi-layer protection coupling does not need to be configured, so that multiple times of switching are prevented in order to ensure PW P2MP single-node protection switching, such as 50 milliseconds (ms). End-to-end switching interruption time is, for example, less than or equal to 150ms.

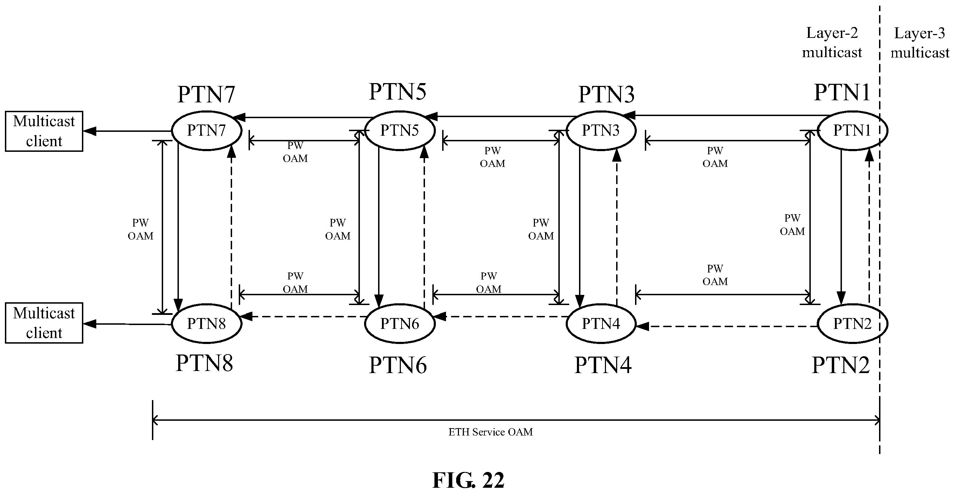

In a multicast service fault detection process, as shown in FIG. 22, the working path and the protection path respectively carry out fast OAM detection, and when a fault of any one of the path with the working Root port and the path with the protection Root port is detected, a fault indicator is required to be inserted into the paths with the working Leaf and the protection Leaf corresponding to the path, so that the node of the next level can be switched to a path according to the fault indicator to receive the multicast service message.

When the paths where the working Root port and the protection Root port are located fail at the same time, all the ports with the switch machines on the nodes are required to insert a fault indicator into the multicast nodes of the next level, so that the nodes of the next level can be switched to a path according to the fault indicator to receive the multicast service message.

For Ethernet service OAM, Ethernet service OAM is configured between the UNIs of all the Root and Leaf nodes for layer-2 multicast, and is the same as the unicast Ethernet service OAM mechanism, and therefore it is not repeated herein again.

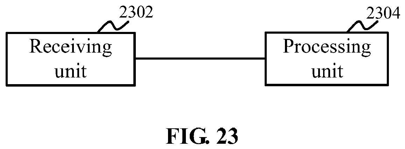

A service message multicast device according to the embodiments of the disclosure, as shown in FIG. 23, includes: a receiving unit 2302 configured to receive a service message sent by a multicast source server and a destination IP address of the service message, wherein the destination IP address includes IP addresses of a plurality of multicast clients; and a processing unit 2304 connected to the receiving unit 2302 and configured to replicate and forward the service message to the plurality of multicast clients corresponding to the destination IP address by utilizing the Point-to-Point (P2P) path between nodes in a packet transport network (PTN), according to the destination IP address of the service message. Here, the service message multicast device according to the embodiments of the disclosure is, for example, arranged at any router between the multicast source server and the multicast client, as shown in FIG. 2.

In the device according to the embodiments of the disclosure, after the service message sent by the multicast source server and the destination IP address of the service message are received, the service message is replicated and forwarded to the plurality of multicast clients corresponding to the destination IP address according to the destination IP address of the service message by utilizing the Point-to-Point (P2P) path between the nodes in the packet transport network (PTN), and thus, the replication and forwarding of the service message to the plurality of multicast clients via the P2P path between the nodes in the PTN are fulfilled. Compared with the complex Point-to-MultiPoint (P2MP) service message multicast implementation technologies based on the MPLS-TP technology in the prior art, the device realizes the multicast of P2MP service message in a P2P mode, and can continue to use the fault detection and protection switching of the P2P mode, thus ensuing fast fault detection and protection switching, and the device is applicable to MPLS-TP-based device that have been deployed.

In one possible embodiment, in the device according to the embodiment of the disclosure, the nodes in the PTN include at least one root node and at least one leaf node, the multicast source server is connected to the root node, and the multicast clients are connected to the leaf node.

In one possible embodiment, in the device according to the embodiment of the disclosure, the processing unit 2304 is configured to: when the processing unit 2304 replicates and forwards the service message to the plurality of multicast clients corresponding to the destination IP address, if it is determined that a current node in the PTN needs to utilize the P2P path to send the service message to a plurality of nodes of a next level, select any node in a network layer at which the current node is located as a master node and another node in the network layer as a standby node, wherein the current node is a root node or a leaf node; and the master node and the standby node replicate the service message and forward the replicated service message to the plurality of nodes of the next level.

In one possible embodiment, in the device according to the embodiment of the disclosure, the path via which the processing unit 2304 replicates and forwards the service message to the plurality of nodes of the next level by means of the master node is a working path and the path via which the processing unit 2304 replicates and forwards the service message to the plurality of nodes of the next level by means of the standby node is a protection path, or the path via which the processing unit 2304 replicates and forwards the service message to the plurality of nodes of the next level by means of the master node is a protection path and the path via which the processing unit 2304 replicates and forwards the service message to the plurality of nodes of the next level by means of the standby node is a working path.

In one possible embodiment, in the device according to the embodiment of the disclosure, the path via which the processing unit 2304 forwards the service message to any node of the next level by means of the master node is different from the path via which the processing unit forwards the service message to the node of the next level by means of the standby node.

In one possible embodiment, in the device according to the embodiment of the disclosure, the processing unit 2304 is further configured to: when any node or a P2P path between nodes in the PTN fails, reselect a path, via which a node of the next level connected to the any node or the path receives the service.

The service message multicast device according to the embodiments of the disclosure can be integrated into an existing PTN. The receiving unit 2302 can be implemented by a receiver or a signal receiver , and the processing unit 2304 can be implemented by a processor, such as a central processing unit (CPU).

To sum up, after the service message sent by the multicast source server and the destination IP address of the service message are received, the service message multicast method and device according to the embodiments of the disclosure replicate the service message and forward the replicated service message to the plurality of multicast clients corresponding to the destination IP address according to the destination IP address of the service message by utilizing the Point-to-Point (P2P) path between the nodes in the packet transport network (PTN), and thus, the replication and forwarding of the service message to the plurality of multicast clients via the P2P path between the nodes in the PTN are fulfilled. The service message multicast method and device according to the embodiments of the disclosure realize the multicast of P2MP service message in a P2P mode, and can continue to use the fault detection and protection switching of the P2P mode, thus ensuing fast fault detection and protection switching, and the service message multicast method and device according to the embodiments of the disclosure are applicable to MPLS-TP-based devices that have been deployed.

Those skilled in the art should understand that the embodiments of the present invention can be provided as a method, a system or a computer program product. Thus, the disclosure can adopt the form of a complete hardware embodiment, a complete software embodiment or an embodiment combined with aspects of software and hardware. Furthermore, the disclosure can adopt the form of a computer program product which is implemented on one or more computer-usable storage media (including but not limited to disk storages, optical memories and so on) containing computer-usable program codes.

The disclosure is described with reference to the method and equipment (system) of the embodiments of the disclosure and the flow chart and/or block diagram of the computer program product. It should be understood that each flow and/or block in the flow chart and/or the block diagram and/or the combination of the flows and/or blocks in the flow chart and/or the block diagram can be implemented by the computer program instructions. The computer program instructions can be applied to the processing unit of a general-purpose computer, a special-purpose computer, an embedded processor or other programmable data processing equipment to bring forth a machine, so that the instructions executed by the processing unit of the computer or the programmable data processing equipment can produce a device for implementing functions specified by one or more flows in the flow chart and/or one or more blocks in the block diagram.

The computer program instructions also can be stored in a computer-readable memory capable of guiding the computer or the programmable data processing equipment to operate in a specific mode, so that the instructions stored in the computer-readable memory can produce a manufacture comprising an instruction unit, and the instruction unit implements the functions specified by one or more flows in the flow chart and/or one or more blocks in the block diagram.

The computer program instructions also can be loaded into the computer or the programmable data processing equipment, so that a series of operation steps are executed on the computer or the programmable data processing equipment to generate processing implemented by the computer, and thereby the instructions executed on the computer or the programmable data processing equipment provide steps for implementing the functions specified by one or more flows in the flow chart and/or one or more blocks in the block diagram.

## Claims

1. A service message multicast method, performed by nodes in a packet transport network, PTN, comprising:
receiving a service message sent by a multicast source server and a destination Internet Protocol, IP, address of the service message, wherein the destination IP address comprises IP addresses of a plurality of multicast clients (402); and
replicating and forwarding the service message to the plurality of multicast clients corresponding to the destination IP address by utilizing a Point-to-Point, P2P, path between the nodes, according to the destination IP address of the service message (404).

2. The method according to claim 1, wherein the nodes in the PTN comprise at least one root node and at least one leaf node, the multicast source server is connected to the root node, and the multicast clients are connected to the leaf node.

3. The method according to claim 2, wherein replicating and forwarding the service message to the plurality of multicast clients corresponding to the destination IP address by utilizing the P2P path between nodes in a PTN, according to the destination IP address of the service message (404) comprises:
when replicating and forwarding the service message to the plurality of multicast clients corresponding to the destination IP address, if it is determined that a current node in the PTN needs to utilize the P2P path to send the service message to a plurality of nodes of a next level, selecting any node in a network layer at which the current node is located as a master node and another node in the network layer as a standby node, wherein the current node is a root node or a leaf node; and
replicating and forwarding the service message to the plurality of nodes of the next level by the master node and the standby node.

4. The method according to claim 3, wherein the path via which the master node replicates the service message and forwards the replicated service messages to the plurality of nodes of the next level is a working path and the path via which the standby node replicates the service message and forwards the replicated service messages to the plurality of nodes of the next level is a protection path, or the path via which the master node replicates and forwards the service message to the plurality of nodes of the next level is a protection path and the path via which the standby node replicates and forwards the service message to the plurality of nodes of the next level is a working path.

5. The method according to claim 3, wherein a path via which the master node forwards the service message to any node of the next level is different from a path via which the standby node forwards the service message to the node of the next level.

6. The method according to any one of claims 2-5, wherein the method further comprises: when any node or a P2P path between nodes in the PTN fails, reselecting, by a node of the next level connected to the any node or the path, a path to receive the service message.

7. A service message multicast device, applied in nodes in a packet transport network, PTN, comprising:
a receiving unit (2302), configured to receive a service message sent by a multicast source server and a destination Internet Protocol, IP, address of the service message, wherein the destination IP address comprises IP addresses of a plurality of multicast clients; and
a processing unit (2304), connected to the receiving unit (2302) and configured to replicate and forward the service message to the plurality of multicast clients corresponding to the destination IP address by utilizing a Point-to-Point, P2P, path between the nodes, according to the destination IP address of the service message.

8. The device according to claim 7, wherein the nodes in the PTN comprise at least one root node and at least one leaf node, the multicast source server is connected to the root node, and the multicast clients are connected to the leaf node.

9. The device according to claim 8, wherein the processing unit (2304) is configured to: when the processing unit (2304) replicates and forwards the service message to the plurality of multicast clients corresponding to the destination IP address, if it is determined that a current node in the PTN needs to utilize the P2P path to send the service message to a plurality of nodes of a next level, select any node in a network layer at which the current node is located as a master node and another node in the network layer as a standby node, wherein the current node is a root node or a leaf node; and
the master node and the standby node replicate and forward the service message to the plurality of nodes of the next level.

10. The device according to claim 9, wherein the path via which the processing unit (2304) replicates and forwards the service message to the plurality of nodes of the next level by means of the master node is a working path and the path via which the processing unit (2304) replicates and forwards the service message to the plurality of nodes of the next level by means of the standby node is a protection path, or the path via which the processing unit (2304) replicates and forwards the service message to the plurality of nodes of the next level by means of the master node is a protection path and the path via which the processing unit (2304) replicates and forwards the service message to the plurality of nodes of the next level by means of the standby node is a working path.

11. The device according to claim 9, wherein a path via which the processing unit (2304) forwards the service message to any node of the next level by means of the master node is different from a path via which the processing unit (2304) forwards the service message to the node of the next level by means of the standby node.

12. The device according to any one of claims 8-11, wherein the processing unit (2304) is further configured to: when any node or a P2P path between nodes in the PTN fails, reselect a path, via which a node of the next level connected to the any node or the path receives the service.

## Patentansprüche

1. Dienstnachricht-Multicast-Verfahren, das von Knoten in einem Pakettransportnetzwerk, PTN, durchgeführt wird, umfassend:
Empfangen einer von einem Multicast-Quellserver gesendeten Dienstnachricht und einer Internetprotokoll-, IP-, Zieladresse der Dienstnachricht, wobei die Ziel-IP-Adresse IP-Adressen einer Mehrzahl von Multicast-Clients (402) umfasst; und
Replizieren und Weiterleiten der Dienstnachricht an die Mehrzahl von Multicast-Clients, die der Ziel-IP-Adresse entsprechen, indem ein Punkt-zu-Punkt-, P2P-, Pfad zwischen den Knoten gemäß der Ziel-IP-Adresse der Dienstnachricht (404) genutzt wird.

2. Verfahren nach Anspruch 1, wobei die Knoten in dem PTN wenigstens einen Wurzelknoten und wenigstens einen Blattknoten umfassen, der Multicast-Quellserver mit dem Wurzelknoten verbunden ist und die Multicast-Clients mit dem Blattknoten verbunden sind.

3. Verfahren nach Anspruch 2, wobei das Replizieren und das Weiterleiten der Dienstnachricht an die Mehrzahl von Multicast-Clients, die der Ziel-IP-Adresse entsprechen, durch das Nutzen des P2P-Pfads zwischen Knoten in einem PTN gemäß der Ziel-IP-Adresse der Dienstnachricht (404) umfasst:
beim Replizieren und Weiterleiten der Dienstnachricht an die Mehrzahl von Multicast-Clients, die der Ziel-IP-Adresse entsprechen, wenn bestimmt wird, dass ein aktueller Knoten in dem PTN den P2P-Pfad nutzen muss, um die Dienstnachricht an eine Mehrzahl von Knoten einer nächsten Ebene zu senden, Auswählen eines beliebigen Knotens in einer Netzwerkschicht, in der sich der aktuelle Knoten befindet, als einen Master-Knoten und eines anderen Knotens in der Netzwerkschicht als einen Standby-Knoten, wobei der aktuelle Knoten ein Wurzelknoten oder ein Blattknoten ist; und
Replizieren und Weiterleiten der Dienstnachricht an die Mehrzahl von Knoten der nächsten Ebene durch den Master-Knoten und den Standby-Knoten.

4. Verfahren nach Anspruch 3, wobei der Pfad, über den der Master-Knoten die Dienstnachricht repliziert und die replizierten Dienstnachrichten an die Mehrzahl von Knoten der nächsten Ebene weiterleitet, ein Arbeitspfad ist und der Pfad, über den der Standby-Knoten die Dienstnachricht repliziert und die replizierten Dienstnachrichten an die Mehrzahl von Knoten der nächsten Ebene weiterleitet, ein Schutzpfad ist, oder der Pfad, über den der Master-Knoten die Dienstnachricht repliziert und an die Mehrzahl von Knoten der nächsten Ebene weiterleitet, ein Schutzpfad ist und der Pfad, über den der Standby-Knoten die Dienstnachricht repliziert und an die Mehrzahl von Knoten der nächsten Ebene weiterleitet, ein Arbeitspfad ist.

5. Verfahren nach Anspruch 3, wobei ein Pfad, über den der Master-Knoten die Dienstnachricht an einen beliebigen Knoten der nächsten Ebene weiterleitet, sich von einem Pfad unterscheidet, über den der Standby-Knoten die Dienstnachricht an den Knoten der nächsten Ebene weiterleitet.

6. Verfahren nach einem der Ansprüche 2-5, wobei das Verfahren ferner umfasst: wenn ein beliebiger Knoten oder ein P2P-Pfad zwischen Knoten in dem PTN ausfällt, erneutes Auswählen eines Pfads zum Empfangen der Dienstnachricht durch einen mit dem beliebigen Knoten oder dem Pfad verbundenen Knoten der nächsten Ebene.

7. Multicast-Vorrichtung für Dienstnachrichten, die in Knoten in einem Pakettransportnetzwerk, PTN, angewendet wird, umfassend:
eine Empfangseinheit (2302), die dazu konfiguriert ist, eine von einem Multicast-Quellserver gesendete Dienstnachricht und eine Internetprotokoll-, IP-, Zieladresse der Dienstnachricht zu empfangen, wobei die Ziel-IP-Adresse IP-Adressen einer Mehrzahl von Multicast-Clients umfasst; und
eine Verarbeitungseinheit (2304), die mit der Empfangseinheit (2302) verbunden und dazu konfiguriert ist, die Dienstnachricht zu replizieren und an die Mehrzahl von Multicast-Clients weiterzuleiten, die der Ziel-IP-Adresse entsprechen, indem sie einen Punkt-zu-Punkt-, P2P-, Pfad zwischen den Knoten gemäß der Ziel-IP-Adresse der Dienstnachricht nutzt.

8. Vorrichtung nach Anspruch 7, wobei die Knoten in dem PTN wenigstens einen Wurzelknoten und wenigstens einen Blattknoten umfassen, der Multicast-Quellserver mit dem Wurzelknoten verbunden ist und die Multicast-Clients mit dem Blattknoten verbunden sind.

9. Vorrichtung nach Anspruch 8, wobei die Verarbeitungseinheit (2304) dazu konfiguriert ist: wenn die Verarbeitungseinheit (2304) die Dienstnachricht repliziert und an die Mehrzahl von Multicast-Clients weiterleitet, die der Ziel-IP-Adresse entsprechen, wenn bestimmt wird, dass ein aktueller Knoten in dem PTN den P2P-Pfad nutzen muss, um die Dienstnachricht an eine Mehrzahl von Knoten einer nächsten Ebene zu senden, einen beliebigen Knoten in einer Netzwerkschicht, in der sich der aktuelle Knoten befindet, als einen Master-Knoten und einen anderen Knoten in der Netzwerkschicht als einen Standby-Knoten auszuwählen, wobei der aktuelle Knoten ein Wurzelknoten oder ein Blattknoten ist; und
der Master-Knoten und der Standby-Knoten die Dienstnachricht an die Mehrzahl von Knoten der nächsten Ebene replizieren und weiterleiten.

10. Vorrichtung nach Anspruch 9, wobei der Pfad, über den die Verarbeitungseinheit (2304) die Dienstnachricht mittels des Master-Knotens repliziert und an die Mehrzahl von Knoten der nächsten Ebene weiterleitet, ein Arbeitspfad ist und der Pfad, über den die Verarbeitungseinheit (2304) die Dienstnachricht mittels des Standby-Knotens repliziert und an die Mehrzahl von Knoten der nächsten Ebene weiterleitet, ein Schutzpfad ist, oder der Pfad, über den die Verarbeitungseinheit (2304) die Dienstnachricht mittels des Master-Knotens repliziert und an die Mehrzahl von Knoten der nächsten Ebene weiterleitet, ein Schutzpfad ist und der Pfad, über den die Verarbeitungseinheit (2304) die Dienstnachricht mittels des Standby-Knotens repliziert und an die Mehrzahl von Knoten der nächsten Ebene weiterleitet, ein Arbeitspfad ist.

11. Vorrichtung nach Anspruch 9, wobei ein Pfad, über den die Verarbeitungseinheit (2304) die Dienstnachricht mittels des Master-Knotens an einen beliebigen Knoten der nächsten Ebene weiterleitet, sich von einem Pfad unterscheidet, über den die Verarbeitungseinheit (2304) die Dienstnachricht mittels des Standby-Knotens an den Knoten der nächsten Ebene weiterleitet.

12. Vorrichtung nach einem der Ansprüche 8-11, wobei die Verarbeitungseinheit (2304) ferner dazu konfiguriert ist: wenn ein beliebiger Knoten oder ein P2P-Pfad zwischen Knoten in dem PTN ausfällt, einen Pfad erneut auszuwählen, über den ein mit dem beliebigen Knoten oder dem Pfad verbundener Knoten der nächsten Ebene den Dienst empfängt.

## Revendications

1. Procédé de multidiffusion de messages de service, réalisé par des nœuds dans un réseau de transport par paquets, PTN, comprenant :
la réception d'un message de service envoyé par un serveur source de multidiffusion et d'une adresse de protocole Internet, IP, de destination du message de service, dans lequel l'adresse IP de destination comprend les adresses IP d'une pluralité de clients de multidiffusion (402) ; et
la reproduction et le réacheminement du message de service à la pluralité de clients de multidiffusion correspondant à l'adresse IP de destination par l'utilisation d'un trajet point à point, P2P, entre les nœuds, selon l'adresse IP de destination du message de service (404).

2. Procédé selon la revendication 1, dans lequel les nœuds dans le PTN comprennent au moins un nœud racine et au moins un nœud feuille, le serveur source de multidiffusion est relié au nœud racine, et les clients de multidiffusion sont reliés au nœud feuille.

3. Procédé selon la revendication 2, dans lequel la reproduction et le réacheminement du message de service à la pluralité de clients de multidiffusion correspondant à l'adresse IP de destination par l'utilisation du trajet P2P entre des nœuds dans un PTN, selon l'adresse IP de destination du message de service (404) comprennent :
lors de la reproduction et du réacheminement du message de service à la pluralité de clients de multidiffusion correspondant à l'adresse IP de destination, s'il est déterminé qu'un nœud actuel dans le PTN a besoin d'utiliser le trajet P2P pour envoyer le message de service à une pluralité de nœuds d'un niveau suivant, la sélection de n'importe quel nœud dans une couche de réseau dans laquelle le nœud actuel est situé en tant que nœud maître et d'un autre nœud dans la couche de réseau en tant que nœud en attente, dans lequel le nœud actuel est un nœud racine ou un nœud feuille ; et
la reproduction et le réacheminement du messages de service à la pluralité de nœuds du niveau suivant par le nœud maître et le nœud en attente.

4. Procédé selon la revendication 3, dans lequel le trajet via lequel le nœud maître reproduit le message de service et réachemine les messages de service reproduits à la pluralité de nœuds du niveau suivant est un trajet de travail et le trajet via lequel le nœud en attente reproduit le message de service et réachemine les messages de service reproduits à la pluralité de nœuds du niveau suivant est un trajet de protection, ou le trajet via lequel le nœud maître reproduit et réachemine le message de service à la pluralité de nœuds du niveau suivant est un trajet de protection et le trajet via lequel le nœud en attente reproduit et réachemine le message de service à la pluralité de nœuds du niveau suivant est un trajet de travail.

5. Procédé selon la revendication 3, dans lequel un trajet via lequel le nœud maître réachemine le message de service à n'importe quel nœud du niveau suivant est différent d'un trajet via lequel le nœud en attente réachemine le message de service au nœud du niveau suivant.

6. Procédé selon l'une quelconque des revendications 2 à 5, dans lequel le procédé comprend en outre : lorsque n'importe quel nœud ou un trajet P2P entre des nœuds dans le PTN est défaillant, la nouvelle sélection, par un nœud du niveau suivant relié à n'importe quel nœud ou au trajet, d'un trajet pour recevoir le message de service.

7. Dispositif de multidiffusion de messages de service, appliqué dans des nœuds dans un réseau de transport par paquets, PTN, comprenant :
une unité de réception (2302), configurée pour recevoir un message de service envoyé par un serveur source de multidiffusion et une adresse de protocole Internet, IP, de destination du message de service, dans lequel l'adresse IP de destination comprend des adresses IP d'une pluralité de clients de multidiffusion ; et
une unité de traitement (2304), reliée à l'unité de réception (2302) et configurée pour reproduire et réacheminer le message de service à la pluralité de clients de multidiffusion correspondant à l'adresse IP de destination par l'utilisation d'un trajet point à point, P2P, entre les nœuds, selon l'adresse IP de destination du message de service.

8. Dispositif selon la revendication 7, dans lequel les nœuds dans le PTN comprennent au moins un nœud racine et au moins un nœud feuille, le serveur source de multidiffusion est relié au nœud racine, et les clients de multidiffusion sont reliés au nœud feuille.

9. Dispositif selon la revendication 8, dans lequel unité de traitement (2304) est configurée pour: lorsque l'unité de traitement (2304) reproduit et réachemine le message de service à la pluralité de clients de multidiffusion correspondant à l'adresse IP de destination, s'il est déterminé qu'un nœud actuel du PTN a besoin d'utiliser le trajet P2P pour envoyer le message de service à une pluralité de nœuds d'un niveau suivant, sélectionner n'importe quel nœud dans une couche de réseau dans laquelle le nœud actuel est situé en tant que nœud maître et un autre nœud dans la couche de réseau en tant que nœud en attente, dans lequel le nœud actuel est un nœud racine ou un nœud feuille ; et
le nœud maître et le nœud en attente reproduisent et réacheminent le message de service à la pluralité de nœuds du niveau suivant.

10. Dispositif selon la revendication 9, dans lequel le trajet via lequel l'unité de traitement (2304) reproduit et réachemine le message de service à la pluralité de nœuds du niveau suivant au moyen du nœud maître est un trajet de travail et le trajet via lequel l'unité de traitement (2304) reproduit et réachemine le message de service à la pluralité de nœuds du niveau suivant au moyen du nœud en attente est un trajet de protection, ou le trajet via lequel l'unité de traitement (2304) reproduit et réachemine le message de service à la pluralité de nœuds du niveau suivant au moyen du nœud maître est un trajet de protection et le trajet via lequel l'unité de traitement (2304) reproduit et réachemine le message de service à la pluralité de nœuds du niveau suivant au moyen du nœud en attente est un trajet de travail.

11. Dispositif selon la revendication 9, dans lequel un trajet via lequel l'unité de traitement (2304) réachemine le message de service à n'importe quel nœud du niveau suivant au moyen du nœud maître est différent d'un trajet via lequel l'unité de traitement (2304) réachemine le message de service au nœud du niveau suivant au moyen du nœud en attente.

12. Dispositif selon l'une quelconque des revendications 8 à 11, dans lequel l'unité de traitement (2304) est en outre configurée pour : lorsque n'importe quel nœud ou un trajet P2P entre des nœuds dans le PTN est défaillant, sélectionner à nouveau un trajet, via lequel un nœud du niveau suivant relié à n'importe quel nœud ou au trajet reçoit le service.
